(19) Europäisches Patentamt
European Patent Office
Office européen des brevets

(11) **EP 3 393 268 B1**

(12) **EUROPEAN PATENT SPECIFICATION**

(45) Date of publication and mention
of the grant of the patent:
**04.09.2019 Bulletin 2019/36**

(51) Int Cl.:
**A23G 1/50** (2006.01)　　　**A23G 1/56** (2006.01)

(21) Application number: **16820265.3**

(86) International application number:
**PCT/EP2016/082281**

(22) Date of filing: **22.12.2016**

(87) International publication number:
**WO 2017/109019 (29.06.2017 Gazette 2017/26)**

(54) **NATURAL FLAVOR ENHANCEMENT OF COCOA MALTED COMPOSITIONS**

NATÜRLICHE GESCHMACKSVERSTÄRKUNG VON KAKAO-MALZZUSAMMENSETZUNGEN

AMÉLIORATION DE L'ARÔME NATUREL DE COMPOSITIONS MALTÉES DE CACAO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2015 EP 15202232**

(43) Date of publication of application:
**31.10.2018 Bulletin 2018/44**

(73) Proprietor: **Société des Produits Nestlé S.A.
1800 Vevey (CH)**

(72) Inventors:
• **LORENZ, Peter
Singapore 249633 (SG)**
• **GUBLER, Miguel
8405 Winterthur (CH)**
• **CHRETIEN, Rolf
8852 Altendorf (CH)**
• **HAAS, Stefan
1417 Essertines-sur-Yverdon (CH)**
• **FORNY, Laurent
1000 Lausanne 26 (CH)**

(74) Representative: **Cogniat, Eric Jean Marie
Société des Produits Nestlé S.A.
Avenue Nestlé 55
1800 Vevey (CH)**

(56) References cited:
**EP-A1- 1 068 807**　　**EP-A2- 0 920 814**
**EP-B1- 2 427 068**　　**GB-A- 2 369 985**

**Description**

**FIELD OF INVENTION**

The present invention relates to a process to naturally enhance the flavour of cocoa malted beverage powders.

**BACKGROUND OF THE INVENTION**

Cocoa malted beverage powders are typically prepared by combining cocoa, malt extract, oil, milk powder, sugar and water to form a paste, which is then dried and granulated into a powder. The drying process can be carried out with a vacuum band dryer, for example.

US 6541056 describes a process for preparing a malted beverage powder, where liquid beverage ingredients and a first portion of dry malted beverage ingredients are wet mixed to provide a wet mixture having a moisture content of about 20% or less. The wet mixture is vacuum dried to provide a dry cake which is comminuted to a base powder. The base powder is then dry mixed with a further portion of dry malted beverage ingredients to yield the malted beverage powder. The malted beverage powder so obtained has a substantially homogeneous colour and characteristics such as flavour and texture similar to those of conventionally-prepared malted beverage powder.

EP 2427068 describes a process for preparing a dried malted beverage product, comprising the following steps: a) mixing together solid and liquid constituents of the beverage product in a single vessel so as to form a mixture; b) subjecting the mixture in the vessel to heat at a lowered pressure so as to effect drying and granulation of the mixture and form the dried malted beverage product; and c) discharging the dried malted beverage product from the vessel. The process is carried out in a single vessel for mixing, drying and granulation.

EP 1068807 A1 describes a process for producing a malted beverage powder. The process comprises wet mixing dry ingredients to provide a wet mixture having a moisture content of about 20%, drying the wet mixture under vacuum to provide a dry cake, comminuting the dry cake into a base powder which is dry-mixed with a further portion of the dry malted beverage ingredients.

GB 2369985 A describes a process for manipulating the flavour of chocolate crumbs.

EP 0920814 A2 describes a process for producing a malted beverage powder which reduces drying requirements. The process comprises extrusion-cooking the malted beverage ingredients, introducing an inert gas into the extruder and homogeneously mixing it into the malted beverage ingredients to produce a gassed molten mass. The gassed molten mass is extruded to provide an expanded extrudate which is then chilled to stabilise the expanded structure of the expanded extrudate. The expanded extrudate is then comminuted to powder.

Usually, the drying process is a rate limiting step in the production of cocoa malted beverage powders. Fast drying speeds are essential for a good performance of the industrial process. However, a significant part of the characteristic flavour of cocoa malted beverage compositions is generated during the drying process as the drying process usually comprises baking.

Very fast drying speeds can consequently result in an unwanted loss of the characteristic flavour of cocoa malted beverage compositions.

It would therefore be desirable to provide the art with a process that allows it to enhance the characteristic flavour of cocoa malted beverage compositions naturally, so that the reduced flavour generation during reduced drying times can be compensated for.

The object of the present invention is therefore to improve the state of the art and in particular to provide a process that allows it to enhance the characteristic flavour of cocoa malted beverage compositions naturally, so that - for example - the reduced flavour generation during reduced drying times can at least partially be compensated for, or to at least provide a useful alternative.

The inventors were surprised to see that the object of the present invention could be achieved by the subject matter of the independent claims. The dependent claims further develop the idea of the present invention.

**SUMMARY OF THE INVENTION**

Accordingly, the present invention provides a process for the production of a cocoa malted beverage powder composition, the malted beverage powder composition comprising cocoa powder, malt extract, oil, milk powder and sugar and being obtainable by a process comprising the steps of (i) providing the dry ingredients including milk powder, cocoa powder and sugar, (ii) combining the provided dry ingredients with the liquid ingredients including water, malt extract and oil to form a paste, (iii) drying and baking the paste in a dryer and (iv) crushing the baked paste into a cocoa malted beverage powder composition, wherein said process is characterised in that it comprises the steps of:

(a) forming a wet premixture by mixing milk powder with malt extract, oil and water,
(b) subjecting the wet premixture to a heat treatment at a temperature of 120°C to 140°C, for a time period of 10 min to 20 min, to generate a heated premixture, and then
(c) combining the heated premixture with the liquid ingredients and the dry ingredients to form the paste, whereby the heated premixture comprises 1 to 4 weight% of the paste.

The present invention also provides the use of the process of the present invention to increase the specific malted flavour.

As used in this specification, the words "comprises", "comprising", and similar words, are not to be interpreted in an exclusive or exhaustive sense. In other words, they are intended to mean "including, but not limited to".

The present inventors were surprised to find that a loss of flavour generation due to shortened drying times can be compensated for by taking 1-4 weight-% each of the ingredients milk powder, malt extract, oil and water from the starting material, mixing them to form a wet premixture, subjecting the wet premixture to a heat treatment at 120°C-140°C for 10 min to 20 min and adding the heat treated ingredients back to the other ingredients to form a paste, which is then dried, baked and crushed to form the powder. Remarkably, a relatively short heat treatment of a very small fraction of the starting material is sufficient to achieve this effect.

## BRIEF DESCRIPTION OF THE DRAWINGS

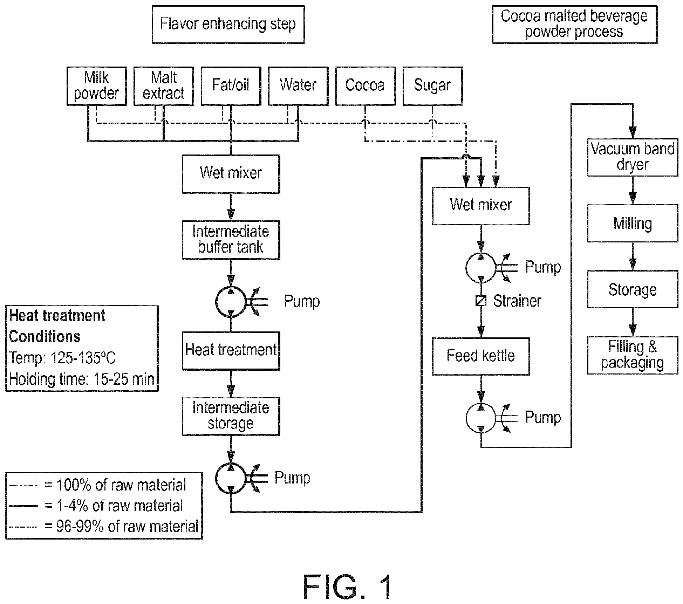

Figure 1 shows a flowchart of the process according to the present invention.
Figure 2 shows the relative concentration of aroma compounds in cocoa malted beverage powders prepared with standard throughput (sample 1) as compared to increased throughput without preheating of selected ingredients (sample 2) and increased throughput with preheating of selected ingredients (sample 3).

## DETAILED DESCRIPTION OF THE INVENTION

Consequently the present invention relates in part to a process for the preparation of a cocoa malted beverage powder composition. The cocoa malted beverage powder composition comprises cocoa powder, malt extract, oil, milk powder and sugar. The cocoa malted beverage powder composition is obtainable by a process comprising the steps of (i) providing the dry ingredients including milk powder, cocoa powder and sugar, (ii) combining the provided dry ingredients with the liquid ingredients including water, malt extract and oil to form a paste, (iii) drying and baking the paste in a dryer and (iv) crushing the baked paste into a cocoa malted beverage powder composition. The process according to the invention comprises the steps of:

(a) forming a wet premixture by mixing milk powder with malt extract, oil and water,
(b) subjecting the wet premixture to a heat treatment at a temperature of 120°C to 140°C, for a time period of 10 min to 20 min, to generate a heated premixture, and then
(c) combining the heated premixture with the liquid ingredients and the dry ingredients to form the paste, whereby the heated premixture comprises 1 to 4 weight% of the paste.

The process of the present invention, and in particular the steps of forming a wet premixture with the milk powder, malt extract, oil and water from the starting material, subjecting the wet premixture to a heat treatment at a temperature of 120°C to 140°C for a time period of 10 min to 20 min to generate a heated premixture, and then combining the heated premixture with the liquid ingredients and the dry ingredients to form the paste, may be used to enhance the flavour of a cocoa malted beverage powder composition.

"Malt" means any cereal grain, in particular barley, which has germinated and has been subsequently dried according to generally known malting processes.

"Cereal" means grains which are any starch containing material used as raw material such as, but not limited to, barley, wheat, sorghum, maize, rice, oat and rye.

"Malt extract" is a liquid or a powder obtained from the hydrolysis of malt or of a mixture of malt and adjunct, followed by the filtration and concentration of the hydrolysate, and optionally the drying, to form a powder malt extract.

An "adjunct" is any source of starch that is not malted. The adjunct used could be either solid or liquid or both, such as, but not limited to, wheat, barley, starch, maltodextrin, molasses, roasted grains, rice grist, syrup and caramel.

A "malted beverage powder" is any beverage powder containing malt extract, for example at least 15 weight-%.

A "cocoa malted beverage powder" is a malted beverage powder comprising cocoa.

A "paste" is a mixture of at least one powder and at least one liquid that has a soft and malleable consistency.

In the process of preparing a cocoa malted beverage powder, the ingredients are transformed into a paste and the paste is then dried. Drying is typically achieved at elevated temperatures, so that the drying includes baking. "Baking" is a food cooking method that uses prolonged dry heat exposure. This dry heat exposure can be achieved by any means known in the art, for example in an oven or using a vacuum band dryer (VBD).

For example, through optimal usage of the drying equipment, for example of a VBD, drying times can be shortened from 20 min to about 8 min. Consequently, the drying time is reduced by about 30 to 60 %. Such a reduced drying time may even be achieved while keeping the drying temperatures constant in the range of 125°C to 180°C.

When the wet premixture is heated to yield the heated premixture, this heat treatment may be carried out at a temperature of 125°C to 135°C. The inventors have achieved very good results with a heat treatment at a temperature of about 130°C. This heat treatment may be carried out, for example, for 13 min to 17 min. The inventors have achieved very good results with a heat treatment for 15 min to 16 min. Thus for instance, the wet premixture is subjected to a heat treatment at a temperature of 125°C to 135°C, for a time period of 13 min to 17 min, to generate the heated premixture.

The inventors were surprised to see that relatively small amounts of heated premixture were sufficient to make up for a loss of flavour generation during reduced drying times of the paste. For example, using between 1.5 and 2 weight % of each of the ingredients milk powder, malt extract, oil and water from the starting material of the paste, mixing milk powder with malt extract, oil and water to form a wet premixture, subjecting the wet premixture to a heat treatment at a temperature of 120°C to 140°C for a time period of 10 min to 20 min to generate a heated premixture, and then combining the heated premixture with the liquid ingredients and the dry ingredients to form the paste were sufficient to obtain the desired effect.

The premixture may comprise, based on the weight of the premixture: 5 to 10 weight% of water, 10 to 20 weight% of oil, 12 to 25 weight% of milk powder, and 45 to 70 weight% of malt extract. For examples, the premixture comprises, based on the weight of the premixture: 6 to 9 weight% of water, 12 to 18 weight% of oil, 15 to 21 weight% of milk powder, and 55 to 65 weight% of malt extract. Neither cocoa powder nor sugar are required in the premixture to obtain the desired effect. For example, the premixture does not comprise sugar. Also for example, the premixture does not comprise cocoa powder.

This surprising effect allows it, for example, to make better use of the drying equipment, and in particular to speed up the drying process. This results in saving significant amounts of energy and in an overall faster production process.

When the heated premixture is combined with the liquid ingredients and the dry ingredients to form the paste, the heated premixture may be added as liquid ingredient to the remaining liquid ingredients before they are combined with the remaining dry ingredients to form the paste. This has the advantage that the heated premixture - due to its liquid nature - is easier to combine with the remaining liquid ingredients than with a mixture of liquid and dry ingredients. This will reduce the risk of aggregate formation.

The heated premixture may represent 1 to 4 weight% of the paste, such as for example 1.5 to 2 weight% of the paste.

The heat treatment of the wet premixture may be carried out by any means known to skilled person. For example, the wet premixture may be heated in a tubular heat exchanger. Tubular heat exchangers are a very efficient tool when heating liquid compositions.

For example, the heat treatment of the premixture may be carried out at an $F_0$ value of 30 min to 50 min, for example of 38 min.

The $F_0$ value is defined as the total integrated lethal effect and is expressed in terms of minutes at a selected reference temperature of 121.1°C. Conse-

quently, $F_0$=1 min after a product has been heated to 121.1°C for 1 min.

$F_0$ can be calculated as follows:

$$F_0 = 10^{\frac{T-121.1}{z}} \times \frac{t}{60}$$

with T = processing temperature (°C), z = Z-value (°C), and t = processing time (seconds).

The Z-Value is defined as the temperature change which gives a 10-fold change in the D-value. The D-Value is also called the decimal reduction time and is defined as the time required to reduce the number of microorganisms to one-tenth of the original number of microorganisms, which corresponds to a reduction of 90% in the number of microorganisms.

Hence, the $F_0$ value allows it to compare the effect of different time/temperature combinations.

The present inventors have found that the heating of the premixture in the process of the present invention produces very good results at an $F_0$ value of 30 min to 50 min, for example of 38 min.

For the process of the present invention any milk powder can be used. For example skimmed milk powder may be used.

As oil any food grade oil may be used. For example the oil may be selected from the group consisting of palm oil, coconut oil, palm kernel oil, butter oil, corn oil or a mixture thereof.

The paste may be dried by dry heat exposure. Dry heat exposure can be achieved by any means known in the art, for example in an oven or using a vacuum band dryer (VBD). VBDs have the advantage that they can be operated continuously. If the paste is dried in a VBD, the VBD may be operated at a temperature in the range of 125°C to 180°C, for example at 140°C to 160°C.

The total drying time in the vacuum band dryer may be about 8 min to 20 min, for example 9 min to 11 min. If the drying time is too short, the paste will be insufficiently dried and the resulting powder will be insufficient with respect to quality. Too long drying times result in energy waste and may also cause taste deteriorations.

The present invention also relates to a process for the preparation of a cocoa malted beverage powder composition, comprising the steps of (i) providing the dry ingredients including milk powder, cocoa powder and sugar, (ii) combining the provided dry ingredients with the liquid ingredients including water, malt extract and oil to form a paste, (iii) drying and baking the paste in a dryer, and (iv) crushing the baked paste into a cocoa malted beverage powder composition, wherein the process further comprises the steps of:

(a) forming a wet premixture by mixing milk powder with malt extract, oil and water,
(b) subjecting the wet premixture to a heat treatment at a temperature of 120°C to 140°C, for a time period of 10 min to 20 min, to generate a heated premixture, and then

(c) combining the heated premixture with the liquid ingredients and the dry ingredients to form the paste, whereby the heated premixture comprises 1 to 4 weight% of the paste.

The inventors have performed extensive experimental work to understand what flavours are produced less during reduced drying times, e.g., in a VBD.

The inventors have also performed extensive experimental work to understand what flavours are produced using the heat treatment of the wet premix.

The heat treatment of the wet premix allowed in particular to increase the presence of 2-methylbutanal, 3-methylbutanal, phenylacetaldehyde, 2,3-butanedione, 2,3-pentanedione, furaneol, and/or maltol.

Hence, the process of the present invention may be used to increase the specific malted flavour, for example in cocoa malted beverage compositions.

In particular, the heat treatment of the wet premix may be used to increase the specific malted flavour, for example in cocoa malted beverage compositions.

The process of the present invention, and in particular the heat treatment of the wet premix may also be used to counterbalance flavour loss. Such flavour loss may for example occur when shorter drying/baking times are used.

Finally, the process of the present invention, and in particular the heat treatment of the wet premix may be used to increase the presence of one or more of the following flavour molecules: 2-methylbutanal, 3-methylbutanal, phenylacetaldehyde, 2,3-butanedione, 2,3-pentanedione, furaneol, maltol.

As such the process of the present invention, and in particular the heat treatment of the wet premix may be used to impart or increase the malty, buttery, caramel, and/or honey taste of a cocoa malted beverage powder composition.

Although the invention has been described by way of example, it should be appreciated that variations and modifications may be made without departing from the scope of the invention as defined in the claims.

## EXAMPLES

### Example 1 (comparative)

Malt extract, skimmed milk powder, sugar, cocoa, and palm oil are mixed in a ribbon blender with water to provide a wet mixture. The mixture has a solids content of about 89.5% by weight. The composition of the mixture is given in Table 1 below.

TABLE 1

| Component | % by weight |
|---|---|
| Malt extract | 33.51% |
| Skimmed milk powder | 22.80% |
| Sugar | 19.06% |
| Palm oil | 11.46% |
| Cocoa | 5.82% |
| Whey | 2.84% |
| Minerals & Vitamins | 2.05% |
| Water | 2.51% |

The wet mixture is then transferred to a vacuum band drier which is operated at 150°C and 25 mbar. The vacuum band drier includes a cooling stage operated at 30°C. The residence in the vacuum band drier is about 25 minutes. The cake leaving the vacuum band drier has a moisture content of about 2.5% to about 3.0%.

The cake is then crushed and milled to provide a powder. The powder preferably has a density of about 500 grams/litre and a size of less than about 2 mm with a broad size distribution. It will be referred to as sample 1.

### Example 2 (comparative)

A wet mixture was prepared and dried in exactly the same manner as Example 1. However, the throughput in the vacuum band drier was increased by 50% compared to Example 1. The cake leaving the vacuum band drier has a moisture content of about 2.5% to about 3.0%.

The cake is then crushed and milled to provide a powder. The powder preferably has a density of about 500 grams/litre and a size of less than about 2 mm with a broad size distribution. It will be referred to as sample 2.

### Example 3

Malt extract, skimmed milk powder, sugar, cocoa, and palm oil are mixed in a ribbon blender with water to provide a wet mixture. The composition of the first wet premixture is given in Table 2 below.

TABLE 2

| Component | % by weight* |
|---|---|
| Malt extract | 32.71% |
| Skimmed milk powder | 22.56% |
| Sugar | 19.05% |
| Palm oil | 11.25% |
| Cocoa | 5.80% |
| Water | 2.40% |
| Whey | 2.85% |
| Mineral & Vitamins | 2.05% |

* % by weight of the wet mixture obtained after combination of the first premixture and the heated second premixture

Separately, a second wet premixture was prepared by mixing malt extract, palm oil and skimmed milk powder with water. The separate wet premixture has a total solids content of about 83.5% by weight. The composition of the second mixture is given in Table 3 below.

TABLE 3

| Component | % by weight* |
|---|---|
| Malt extract | 0.79% |
| Skimmed milk powder | 0.24% |
| Palm oil | 0.20% |
| Water | 0.10% |

* % by weight of the wet mixture obtained after combination of the first premixture and the heated second premixture

The second wet premixture was then heated in a tubular heat exchanger at 128°C for 18.5 min, at a volume of 31.5 kilograms/hour.

The first wet premixture was then combined with the heated second wet premixture to provide a wet mixture. The wet mixture is a paste having a solids content of about 89.5% by weight.

The wet mixture is then transferred to a vacuum band drier which is operated at 150°C and 25 mbar. The vacuum band drier includes a cooling stage operated at 30°C. The residence in the vacuum band drier is about 25 minutes. The throughput of the vacuum band drier is increased by 60% compared to Example 1. The cake leaving the vacuum band drier has a moisture content of about 2.5% to about 3.0%.

The cake is crushed and milled to provide a powder. The powder preferably has a density of about 500 grams/litre and a size of less than about 2 mm with a broad size distribution. It will be referred to as sample 3.

**Example 4**

The concentrations (in ppm dry matter) of the 7 key aroma compounds were determined for Samples 1 to 3 above.

Sample preparation

Cocoa malted beverage powders were reconstituted in water at a total solids content (Ts) of 2% for the analysis of 2-methylbutanal, 3-methylbutanal, phenylacetaldehyde, 2,3-butanedione, 2,3-pentanedione (analytical group 1) as well as at a Ts of 7.5% for furaneol and maltol (analytical group 2). The cocoa malted beverage powders were spiked with isotopically labelled standard molecules (one standard per analyte; standards are molecules with the same structure as the analytes, containing deuterium or $C^{13}$ atoms) in amounts that are similar to the respective analyte (ratio between analyte and standard should range from 0.2 to 5) to analyse compounds of the analytical groups 1 and 2 (grouping was done to tailor analytical parameters and ensure good sensitivity (impacted by introduction of solvent of stock solutions of labelled standards)).

Extraction of aroma

The reconstituted cocoa malted beverages were equilibrated for 120 min at room temperature in the sealed vials and the aroma compounds were then extracted from the headspace during 10 min. at 35°C (analytical group 1) or 30 min. at 60°C (analytical group 2) using Solid Phase Micro Extraction (SPME; 20 mm fibre coated with PDMS/DVB/carboxen). Aroma compounds were thermally desorbed at 240°C and injected into a GC/MS apparatus.

GC/MS analysis

The injected volatiles were separated on a DB-WAX column using the following temperature program: 35°C isotherm for 5 min., at 4°C/min. to 240°C, 240°C isotherm for 10 min. Specific fragments of analyte and (labelled) standards were recorded at 70 eV (EI mode) using a Quadrupol mass spectrometer (MD 800, Finnigan).

Data consolidation

Data were consolidated by means of Xcalibur software. Concentrations of analytes in ppm in the dry cocoa malted beverage powder were calculated by using the following equation:

$$Ca = Qst \times \frac{Pa}{Pst} \times Rf \times Fr \times 1000/W$$

wherein Ca = concentration of analyte [ppm dry cocoa malted beverage]
Qst = quantity of added labelled / internal standard [mg]
Pa = peak area analyte
Pst = peak area standard
Rf = response factor (determined on GC/MS)
Fr = recovery factor (for analytes relative to standard; in case of labelled standards, factor is around 1 or exactly 1)
W = weight of cocoa malted beverage used for analysis [g]

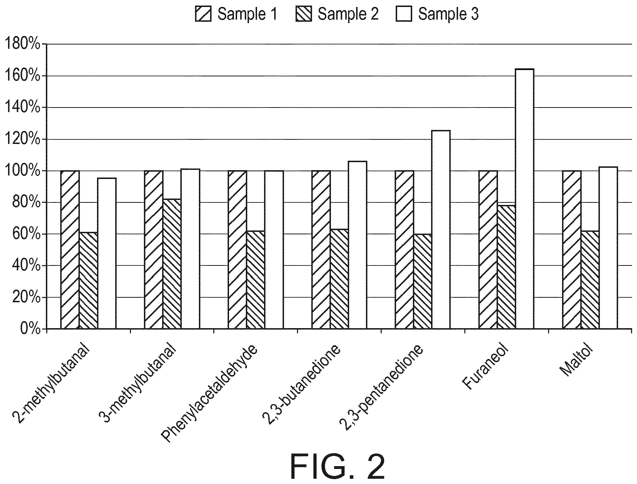

The results that are shown in Figure 2 reveal that the cocoa malted beverage of the present invention (sample 3) contains similar levels of key odorant groups such as 2-methylbutanal, 3-methylbutanal, phenylacetaldehyde, 2,3-butanedione and maltol as compared to the reference beverage (sample 1), even when the drying is performed at 60% higher throughput. For 2,3-pentanedione and furaneol, sample 3 even contains higher levels of the compounds compared to sample 1.

## Claims

1. Process for the preparation of a cocoa malted beverage powder composition, the cocoa malted beverage powder composition comprising cocoa powder, malt extract, oil, milk powder and sugar and being obtainable by a process comprising the steps of (i) providing the dry ingredients including milk powder, cocoa powder and sugar, (ii) combining the provided dry ingredients with the liquid ingredients including water, malt extract and oil to form a paste, (iii) drying and baking the paste in a dryer and (iv) crushing the baked paste into a cocoa malted beverage powder composition,
wherein said process is **characterised in that** it comprises the steps of:

   (a) forming a wet premixture by mixing milk powder with malt extract, oil and water,
   (b) subjecting the wet premixture to a heat treatment at a temperature of 120°C to 140°C, for example of 125°C to 135°C, further for example at 130°C for a time period of 10 min to 20 min, for example 13 min to 17 min, further for example 15 min to 16 min to generate a heated premixture, and then
   (c) combining the heated premixture with the liquid ingredients and the dry ingredients to form the paste, whereby the heated premixture comprises 1 to 4 weight% of the paste, for example between 1.5 and 2 weight% of the paste.

2. Process according to claim 1, wherein the wet premixture is heated in a tubular heat exchanger.

3. Process according to claim 1 or 2, wherein the heat treatment of the premixture is carried out at an $F_0$ value of 35 min to 45 min, for example 38 min, where $F_0$ is calculated as follows

$$F_0 = 10^{\frac{T-121.1}{Z}} \times \frac{t}{60}$$

with T = processing temperature (°C), z = Z-value (°C), and t = processing time (seconds), where the Z-Value is the temperature change which gives a 10-fold change in the D-value, and the D-Value is the time required to reduce the number of microorganisms to one-tenth of the original number of microorganisms.

4. Process according to any one of claims 1 to 3, wherein the milk powder is skimmed milk powder.

5. Process according to any one of claims 1 to 4, wherein the oil is palm oil, coconut oil, palm kernel oil, butter oil, corn oil or a mixture thereof.

6. Process according to any one of claims 1 to 5, wherein the paste is dried in a vacuum band dryer.

7. Process according to claim 6, wherein the vacuum band dryer is operated at 125°C to 180°C, for example at 140°C to 160°C.

8. Process according to claim 6 or 7, wherein the total drying time in the vacuum band dryer is about 8 min to 20 min, for example 9 min to 11 min.

9. Process according to any one of claims 1 to 8, wherein the premixture does not comprise sugar.

10. Process according to any one of claims 1 to 9, wherein the premixture does not comprise cocoa powder.

11. Process according to any one of claims 1 to 10, wherein the premixture comprises 5 to 10 weight% water, 10 to 20 weight% of oil, 12 to 25 weight% of milk powder, and 45 to 70 weight% of malt extract, preferably 6 to 9 weight% water, 12 to 18 weight% of oil, 15 to 21 weight% of milk powder, and 55 to 65 weight% of malt extract.

12. Use of a process according to any one of claims 1 to 11, to increase the specific malted flavour.

13. Use according to claim 12, to counterbalance flavour loss.

14. Use according to claim 12 or 13, to increase the presence of one or more of the following flavour molecules: 2-methylbutanal, 3-methylbutanal, phenylacetaldehyde, 2,3-butanedione, 2,3-pentanedione, furaneol, maltol.

## Patentansprüche

1. Verfahren für die Zubereitung einer gemalzten Kakaogetränkepulverzusammensetzung, wobei die gemalzte Kakaogetränkepulverzusammensetzung Kakaopulver, Malzextrakt, Öl, Milchpulver und Zucker umfasst und durch ein Verfahren erhältlich ist, das folgende Schritte umfasst: (i) das Bereitstellen der trockenen Bestandteile einschließlich Milchpulver, Kakaopulver und Zucker, (ii) das Kombinieren der bereitgestellten trockenen Bestandteile mit den flüssigen Bestandteilen einschließlich Wasser, Malzextrakt und Öl, um eine Paste zu bilden, (iii) das Trocknen und Backen der Paste in einem Trockner und (iv) das Zerkleinern der gebackenen Paste zu einer gemalzten Kakaogetränkepulverzusammensetzung,
wobei das Verfahren **dadurch gekennzeichnet ist, dass** es folgende Schritte umfasst:

(a) das Bilden einer nassen Vormischung durch Mischen von Milchpulver mit Malzextrakt, Öl und Wasser,
(b) das Unterziehen der nassen Vormischung einer Wärmebehandlung bei einer Temperatur von 120 °C bis 140 °C, zum Beispiel von 125 °C bis 135 °C, ferner zum Beispiel bei 130 °C für einen Zeitraum von 10 min bis 20 min, zum Beispiel 13 min bis 17 min, ferner zum Beispiel 15 min bis 16 min, um eine erwärmte Vormischung zu erzeugen, und anschließend
(c) das Kombinieren der erwärmten Vormischung mit den flüssigen Bestandteilen und den trockenen Bestandteilen, um die Paste zu bilden, wobei die erwärmte Vormischung zu 1 bis 4 Gewichts-% die Paste, zum Beispiel zwischen 1,5 und 2 Gewichts-% die Paste umfasst.

2. Verfahren nach Anspruch 1, wobei die nasse Vormischung in einem röhrenförmigen Wärmetauscher erwärmt wird.

3. Verfahren nach Anspruch 1 oder 2, wobei die Wärmebehandlung der Vormischung bei einem $F_0$-Wert von 35 min bis 45 min, zum Beispiel 38 min ausgeführt wird, wobei $F_0$ wie folgt berechnet wird

$$F_0 = 10^{\frac{T-121.1}{z}} \times \frac{t}{60}$$

mit T = Verarbeitungstemperatur (°C), z = Z-Wert (°C) und t = Verarbeitungszeit (Sekunden), wobei der Z-Wert die Temperaturänderung ist, die eine 10-fache Änderung des D-Werts ergibt, und der D-Wert die erforderlich Zeit ist, um die Anzahl von Mikroorganismen auf ein Zehntel der ursprünglichen Anzahl von Mikroorganismen zu verringern.

4. Verfahren nach einem der Ansprüche 1 bis 3, wobei das Milchpulver Magermilchpulver ist.

5. Verfahren nach einem der Ansprüche 1 bis 4, wobei das Öl Palmöl, Kokosnussöl, Palmkernöl, Butteröl, Maisöl oder eine Mischung davon ist.

6. Verfahren nach einem der Ansprüche 1 bis 5, wobei die Paste in einem Vakuumbandtrockner getrocknet wird.

7. Verfahren nach Anspruch 6, wobei der Vakuumbandtrockner bei 125 °C bis 180 °C, zum Beispiel bei 140 °C bis 160 °C betrieben wird.

8. Verfahren nach Anspruch 6 oder 7, wobei die Gesamttrocknungszeit im Vakuumbandtrockner etwa 8 min bis 20 min, zum Beispiel 9 min bis 11 min beträgt.

9. Verfahren nach einem der Ansprüche 1 bis 8, wobei die Vormischung keinen Zucker umfasst.

10. Verfahren nach einem der Ansprüche 1 bis 9, wobei die Vormischung kein Kakaopulver umfasst.

11. Verfahren nach einem der Ansprüche 1 bis 10, wobei die Vormischung 5 bis 10 Gewichts-% Wasser, 10 bis 20 Gewichts-% Öl, 12 bis 25 Gewichts-% Milchpulver und 45 bis 70 Gewichts-% Malzextrakt, vorzugsweise 6 bis 9 Gewichts-% Wasser, 12 bis 18 Gewichts-% Öl, 15 bis 21 Gewichts-% Milchpulver und 55 bis 65 Gewichts-% Malzextrakt umfasst.

12. Verwendung eines Verfahrens nach einem der Ansprüche 1 bis 11, um den spezifischen Malzgeschmack zu steigern.

13. Verwendung nach Anspruch 12, um Geschmacksverlust auszugleichen.

14. Verwendung nach Anspruch 12 oder 13, um das Vorhandensein eines oder mehrerer der folgenden Geschmacksmoleküle zu steigern: 2-Methylbutanal, 3-Methylbutanal, Phenylacetaldehyd, 2,3-Butandion, 2,3-Pentandion, Furanol, Maltol.

**Revendications**

1. Procédé de préparation d'une composition de poudre pour boisson maltée au cacao, la composition de poudre pour boisson maltée au cacao comprenant de la poudre de cacao, un extrait de malt, de l'huile, du lait en poudre et du sucre et pouvant être obtenue par un procédé comprenant les étapes consistant à (i) fournir les ingrédients secs incluant le lait en poudre, la poudre de cacao et le sucre, (ii) combiner les ingrédients secs fournis avec les ingrédients liquides incluant l'eau, l'extrait de malt et l'huile pour former une pâte, (iii) sécher et cuire la pâte dans un séchoir et (iv) broyer la pâte cuite en une composition de poudre pour boisson maltée au cacao,
dans lequel ledit procédé est **caractérisé en ce qu'il** comprend les étapes consistant à :

(a) former un prémélange humide en mélangeant le lait en poudre avec l'extrait de malt, l'huile et l'eau,
(b) soumettre le prémélange humide à un traitement thermique à une température de 120 °C à 140 °C, par exemple de 125 °C à 135 °C, par exemple encore à 130 °C pendant une période de temps de 10 min à 20 min, par exemple de 13 min à 17 min, par exemple encore de 15 min à 16 min pour générer un prémélange chauffé, puis

(c) combiner le prémélange chauffé avec les ingrédients liquides et les ingrédients secs pour former la pâte, moyennant quoi le prémélange chauffé constitue 1 à 4 % en poids de la pâte, par exemple entre 1,5 et 2 % en poids de la pâte.

2. Procédé selon la revendication 1, dans lequel le prémélange humide est chauffé dans un échangeur thermique tubulaire.

3. Procédé selon la revendication 1 ou 2, dans lequel le traitement thermique du prémélange est effectué à une valeur $F_0$ de 35 min à 45 min, par exemple 38 min, où $F_0$ est calculée comme suit

$$F_0 = 10^{\frac{T-121.1}{Z}} \times \frac{t}{60}$$

avec T = température de traitement (°C), z = valeur Z (°C), et t = temps de traitement (secondes), où la valeur Z est le changement de température qui donne un changement de 10 fois de la valeur D, et la valeur D est le temps nécessaire pour réduire le nombre de micro-organismes à un dixième du nombre initial de micro-organismes.

4. Procédé selon l'une quelconque des revendications 1 à 3, dans lequel le lait en poudre est du lait écrémé en poudre.

5. Procédé selon l'une quelconque des revendications 1 à 4, dans lequel l'huile est de l'huile de palme, de l'huile de coco, de l'huile de coeur de palmier, de l'huile de beurre, de l'huile de maïs ou un mélange de celles-ci.

6. Procédé selon l'une quelconque des revendications 1 à 5, dans lequel la pâte est séchée dans un séchoir à tapis sous vide.

7. Procédé selon la revendication 6, dans lequel le séchoir à tapis sous vide est mis en oeuvre à 125 °C à 180 °C, par exemple à 140 °C à 160 °C.

8. Procédé selon la revendication 6 ou 7, dans lequel le temps total de séchage dans le séchoir à tapis sous vide est d'environ 8 min à 20 min, par exemple 9 min à 11 min.

9. Procédé selon l'une quelconque des revendications 1 à 8, dans lequel le prémélange ne comprend pas de sucre.

10. Procédé selon l'une quelconque des revendications 1 à 9, dans lequel le prémélange ne comprend pas de poudre de cacao.

11. Procédé selon l'une quelconque des revendications 1 à 10, dans lequel le prémélange comprend 5 à 10 % en poids d'eau, 10 à 20 % en poids d'huile, 12 à 25 % en poids de lait en poudre, et 45 à 70 % en poids d'extrait de malt, de préférence 6 à 9 % en poids d'eau, 12 à 18 % en poids d'huile, 15 à 21 % en poids de lait en poudre, et 55 à 65 % en poids d'extrait de malt.

12. Utilisation d'un procédé selon l'une quelconque des revendications 1 à 11, pour augmenter la saveur maltée spécifique.

13. Utilisation selon la revendication 12, pour contrebalancer une perte de saveur.

14. Utilisation selon la revendication 12 ou 13, pour augmenter la présence d'une ou plusieurs des molécules de saveur suivantes : 2-méthylbutanal, 3-méthylbutanal, phénylacétaldéhyde, 2,3-butanedione, 2,3-pentanedione, furane-ol, maltol.

FIG. 1

FIG. 2

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6541056 B
- EP 2427068 A
- EP 1068807 A1
- GB 2369985 A
- EP 0920814 A2